# EUROPÄISCHE PATENTSCHRIFT

(11) **EP 4 206 986 B1**
(45) Veröffentlichungstag und Bekanntmachung des Hinweises auf die Patenterteilung: **10.06.2026**
(21) Anmeldenummer: 23150171.9
(22) Anmeldetag: 03.01.2023
(51) Int. Cl.: G06N 3/09, G06V 10/82, G06N 3/0464, G06V 20/69

(54) **VERFAHREN ZUR ANALYSE VON GEFÜGEN IN STAHLPROBEN**
METHOD FOR ANALYZING STRUCTURES IN STEEL SAMPLES
PROCÉDÉ D'ANALYSE DE STRUCTURES DANS DES ÉCHANTILLONS D'ACIER

(30) Priorität: 04.01.2022 EP 22150128
(43) Veröffentlichungstag der Anmeldung: 05.07.2023
(73) Patentinhaber: ThyssenKrupp Steel Europe AG, 47166 Duisburg (DE)
(72) Erfinder: Brugger, Peggy, 47199 Duisburg (DE); Klußmann, Zacharias, 47059 Duisburg (DE); Schmidt, Lasse, 45481 Mülheim (DE); Rupp, Tim-Julian, 41478 Neuss (DE)
(74) Vertreter: Zenz Patentanwälte Partnerschaft mbB

(56) Entgegenhaltungen:
- DE-A1- 102020 200 054
- KONTRASTIERUNG BILDANALYSE ET AL: "Stahlgef�ge besser verstehen -", 31 December 2018 (2018-12-31), XP055933283, Retrieved from the Internet <URL:https://scidok.sulb.uni-saarland.de/bitstream/20.500.11880/27464/1/Diss_final_SULB.pdf> [retrieved on 20220620]
- GOLA JESSICA ET AL: "Advanced microstructure classification by data mining methods", COMPUTATIONAL MATERIALS SCIENCE, ELSEVIER, AMSTERDAM, NL, vol. 148, 23 March 2018 (2018-03-23), pages 324 - 335, XP085369723, ISSN: 0927-0256, DOI: 10.1016/J.COMMATSCI.2018.03.004

## Beschreibung

Die Erfindung betrifft ein Verfahren zur Analyse von Gefügen in Stahlproben sowie ein zugehöriges Verfahren zum Training eines verwendeten neuronalen Netzwerks.

Das erfindungsgemäße Verfahren zur Analyse weist Schritte des Aufbereitens einer Oberfläche der Stahlprobe durch Trennung und mechanisch abrasive Bearbeitung sowie anschließendes Ätzen auf und eine nachgeordnete Erstellung wenigstens einer elektronenmikroskopischen Aufnahme der aufbereiteten Oberfläche.

Verfahren solcher Art werden im Stand der Technik zur Überprüfung der Gefüge-Bestandteile und der Gefüge-Struktur angewendet, wobei die aufbereiteten Proben einer Untersuchung unter Nutzung von Mikroskopie unterzogen werden. Die Untersuchung und Auswertung erfolgt üblicherweise durch erfahrene Metallografinnen oder Metallografen, welche aus den lichtmikroskopischen oder elektronenmikroskopischen Aufnahmen anhand ihres Erfahrungsschatzes und anhand von Referenzwerken eine Zuordnung der Phasen in einer Aufnahme zu bekannten Gefüge-Bestandteilen durchführen und auf diese Weise Rückschlüsse auf das gesamte Gefüge der Stahlprobe ziehen.

Auf die vollständige Definition der Gefüge-Bestandteile und -Phasen sowie deren Beschreibung, also allgemein die wesentlichen Inhalte der Metallografie, kann an dieser Stelle nicht detailliert eingegangen werden. Relevant ist, dass im Stahl verschiedene Gefüge-Bestandteile existieren, welche in ihrer Art, Ausdehnung und Anordnung die Eigenschaften des Stahls ganz wesentlich bestimmen. Klassen von bekannten Gefügen im Stahl sind z.B. Martensit, Austenit, Perlit, Karbid, Angelassener "Martensit" und "Ferrit". Die Klasse "Ferrit" kann weiter differenziert werden in "Bainitischer Ferrit" und "Nicht-Bainitischer Ferrit". Da aber die Interpretation von mikroskopischen Aufnahmen aufbereiteter Stahlproben durch Metallografen anhand von Erfahrungswissen getroffen wird, sind die Ergebnisse dieser Untersuchungen auch davon abhängig, wer eine entsprechende Untersuchung durchführt. Entsprechend geht etabliertes Expertenwissen mit in die Analyse ein, was die Analyse sowohl in gewissem Maße abhängig von dem jeweiligen Experten und seinem Wissen sowie auch einer gegebenenfalls zeitlich veränderlichen Interpretation ein und desselben Experten unterwirft.

Um Analysen zu beschleunigen und in gewissem Maße auch zu objektivieren, gibt es Ansätze, Gefüge-Untersuchungen mit Unterstützung von Systemen zur Klassifizierung durch computergestützte Deep-Learning-Verfahren umzusetzen. Beispielsweise beschreiben Gola et al. in dem Artikel "Advanced microstructure classification by data mining methods", Computational Materials Science, 2018, Seite 324 die computergestützte Untersuchung von Mikrostrukturen an Stahlproben. Dabei werden morphologische Parameter zweiphasiger Stähle unter Verwendung einer Vektormaschine als Klassifizierer eingesetzt.

Es ist vorgeschlagen worden, Gefüge-Untersuchungen auch mit Hilfe von neuronalen Netzen durchzuführen. Beispielsweise beschreibt "Stahlgefüge besser verstehen - Kontrastierung, Bildanalyse und Klassifizierung niedriglegierter Stähle", D. Britz, 2018 (Dissertation, Universität des Saarlandes, https://publikationen.sulb.uni-saarland.de/handle/20.500.11880/27464) den Versuch der Klassifizierung mittels Stützvektorverfahren und Deep Learning.

Das Dokument DE 10 2020 200 054 A1 beschreibt ein Verfahren zum Klassifizieren des Gefüges eines Werkstoffs und beinhaltet das Empfangen einer Aufnahme der Werkstoffoberfläche und deren Klassifizierung mittels eines trainierten neuronalen Netzwerks.

Aufgabe der Erfindung ist es, ein verbessertes System zur reproduzierbaren Klassifizierung von Stahlgefügen an Stahlproben zur Verfügung zu stellen.

Diese Aufgabe wird gelöst durch ein Verfahren mit den Merkmalen des Patentanspruches 1.

Gemäß der Erfindung wird eine elektronenmikroskopische Aufnahme einer aufbereiteten Stahlprobe in Gestalt von digitalen Bilddaten einer sequenziellen Anordnung von trainierten Convolutional Neural Networks (CNN) als Eingangsdaten bereitgestellt. Die Ausgangsdaten des ersten CNN dienen dabei als Eingangsdaten für eine Beschränkung der Analysebereiche des zweiten CNN. Das erste und zweite CNN wurde zuvor trainiert, indem elektronenmikroskopische Aufnahmen mit verschiedenen Gefüge-Phasen und/oder deren Kombination als gelabelte Daten, also zusammen mit zugeordneter Klassifizierung von Bildbereichen zugeführt wurden. In einem Vorgang des überwachten Lernens wurden also zum Training des Systems klassifizierte Bilddaten als Zieldaten vorgegeben, wobei diese Zieldaten durch menschliche Experten klassifiziert wurden. Das derart trainierte CNN klassifiziert danach die Aufnahmen von ihm unbekannten Stahlproben unter Zuordnung von Bildbereichen in Klassen von Gefüge-Bereichen. Die Trainingsdaten des ersten CNN weisen dabei jedenfalls Klassifizierungsdaten zu Bildbereichen von Gefüge-Phasen von "Ferrit" auf. Die Gesamtheit der Klassen entspricht für das erste CNN also "Ferrit" und einer Auswahl anderer Klassen, z.B. Martensit, Austenit, Perlit, Karbid, Angelassener "Martensit" und einer Auffangklasse (None).

Die ursprünglichen Bilddaten werden mit der Klassifizierung des ersten CNN werden in ein zweiten CNN als Eingangsdaten gespeist. Das zweite verwendete CNN wurde zuvor trainiert, indem elektronenmikroskopische Aufnahmen mit verschiedenen klassifizierten Ferrit-Phasen, nämlich "Bainitischer Ferrit" und "Nicht Bainitischer Ferrit" als gelabelte Daten, also zusammen mit zugeordneter Klassifizierung von Bildbereichen zugeführt wurden. Das zweite CNN ist entsprechend auf die Unterscheidung von "Bainitischem Ferrit" und "Nicht Bainitischem Ferrit" und auch "nicht Ferrit" trainiert.

Das zweite CNN ist dabei konfiguriert, um ausschließlich die Bereiche, welche das erste CNN als "Ferrit" klassifiziert hat, einer weiteren Klassifizierung zuzuführen. Insbesondere für Stähle, bei denen es auf komplexe Formbildung bei der späteren Stahlverwendung oder auch Rissempfindlichkeit ankommt, ist die Bestimmung eines "Bainit"-Anteils hilfreich. Da "Bainit" bei mikroskopischen Untersuchungen auch mit andere Gefüge-Phasen leicht verwechselbar ist, ermöglicht das Training des zweiten CNN eine besonders verlässliche, reproduzierbare und objektivierbare Analyse.

Diese sequenzielle Auftrennung der Analyse in zwei abhängige Netze ist vorteilhaft, da die Differenzierung des "Ferrit" durch ein eigens trainiertes CNN eine verlässlichere Zuordnung erlaubt. Die Strukturen der beiden CNNs können sich unterscheiden (z.B. unterschiedliche Anzahl an Schichten, Filtern, etc.), da die unterschiedlichen Phasen in ihrer Struktur variieren (durch Größe der Strukturen, Umgebungen, etc.)

Im Rahmen dieser Anmeldung wird zwischen Gefüge-Phasen, Gefüge-Klassen und Gefüge-Bereichen unterschieden. Die tatsächlichen, metallurgischen Phasen des Gefüges werden dabei als Gefüge-Phasen bezeichnet. Die Klassen sind die Kategorien von unterscheidbaren, trainierten Arten von Gefügen. Die von dem CNN den Klassen jeweils zugeordneten Bildbereiche der Aufnahme einer Stahlprobe werden als Gefüge-Bereiche bezeichnet.

Gemäß der Erfindung wird also eine vorbereitete und elektronenmikroskopisch erfasste Aufnahme einer Stahlprobe zunächst einem durch Expertenwissen trainierten ersten CNN pixelgenau zugeführt, welches die Klassifizierung von Bildbereichen in Gefüge-Bereiche vornimmt, die Gefüge-Klassen zugeordnet sind. Jedem Teil des Bildes wird entsprechend eine Klasse zugeordnet, die vorher in dem Lernvorgang angelernt wurde. Zusammenhängende Bildbereiche mit identischer zugeordneter Klassifikation sind Gefüge-Bereiche. Die maximale Anzahl der möglichen Klassen ist dabei bestimmt durch die Trainingsdaten des ersten CNN, allerding bestehen die Klassen, auf welche das erste CNN trainiert ist in jedem Fall aus "Ferrit", ergänzt um weitere Klassen, ausgewählt aus Martensit, Austenit, Perlit, Karbid, Angelassener Martensit. Anschließend werden die Ausgabedaten des ersten CNN, zusammen mit den ursprünglichen Bilddaten, dem zweiten CNN zugeführt, um ausschließlich die Bereiche, die vom ersten CNN als "Ferrit" klassifiziert wurden weiter zu differenzieren.

Die Differenzierung zwischen verschiedenen Gefüge-Bereichen und deren Gefüge-Klassen beruht auf den Fähigkeiten des CNN. Die Nutzung von solchen Convolutional Neural Networks (CNNs) ist in der Bildverarbeitung grundsätzlich bekannt. Es gibt diesbezüglich vorbereitete programmiertechnische Hilfsmittel und entsprechende Software, die wesentliche Verarbeitungsschritte des CNN abbilden. Die Systeme sind derart vorgefertigt, dass mit geringem Programmieraufwand CNNs angepasst, parametrisiert und trainiert werden können. Entsprechend wird an dieser Stelle nicht auf die grundsätzliche Funktion derartiger Netzwerke eingegangen, da diesbezüglich auf den vorhandenen Stand der Technik verwiesen werden kann. Es wird lediglich ein knapper Überblick gegeben, um einen Kontext für die Erfindung herzustellen.

Es handelt sich bei CNNs um eine besondere Gruppe der computerbasierten neuronalen Netzwerke, bei denen insbesondere Bilddaten (regelmäßig zweidimensionale Bilddaten) einer Eingangsschicht eingegeben werden und dann in mehreren inneren (verdeckten) Schichten mathematischen Faltungs- und Reduktionsoperationen unterworfen werden, um schließlich - in einer Ausgabeschicht - eine den Bildbereichen (Pixeln) zugeordnete Klassifizierung vorzunehmen. Die mathematischen Operationen, die in den jeweiligen Schichten stattfinden, sind bei CNNs regelmäßig Matrizenoperationen (allg. Tensoroperationen). Während eine der Matrizen durch das eingegebene Bild gestellt wird, sind in nachfolgenden Schichten Matrizen auch durch die Ergebnisse der Operation aus höheren Schichten gebildet. Die mit den jeweiligen Matrizen ausgeübten Operationen nutzen neben den Eingangsdaten vom CNN erstellte und optimierte Matrizen, die als Filter oder Kernel bezeichnet werden. Diese Filter oder Kernel enthalten insbesondere die im CNN gespeicherten Kenntnisse und werden durch den Trainingsvorgang geformt. Diese Filter werden in zahlreichen Operationen schrittweise über Ausschnitte der Bildinformationen geführt und die entsprechenden Matrizenoperationen werden durchgeführt, um Ausgabewerte zu erzeugen.

Während diese Faltung in den entsprechenden Convolutional Layers (Faltungsschichten) stattfindet, werden in sogenannten Pooling Layers die Datenmengen reduziert. Die Pooling Layers sorgen in Kombination mit der Faltung als Resultat für eine stufenweise Abstraktion der Daten. Schließlich erfolgt, gegebenenfalls nach einer mehrstufigen Durchführung sowohl der Faltungs- als auch der Poolingschritte, eine Klassifikation der Ergebnisse (dies geschieht üblicherweise in einer als Fully-Connected-Layer bezeichneten Verarbeitungsschicht).

CNNs werden in Verfahren des überwachten Lernens trainiert, es werden also zum Training des CNN gelabelte bzw. klassifizierte Daten zugeführt.

Wie oben bereits erwähnt, können derartige CNNs hinsichtlich ihrer Komplexität und Verarbeitungsweise mit verfügbaren Tools parametrisiert werden (ein entsprechendes Softwarepaket ist z.B. das Tool TensorFlow). Entscheidend für die erwünschte Funktion eines solchen CNNs ist einerseits das entsprechende Training, welches durch überwachtes Lernen des CNN erfolgt, andererseits auch die Parametrisierung (oder auch die Struktur und Arbeitsweise) des zu bildenden CNN. Das Parametrisieren ist immer auch ein empirischer Prozess, denn das CNN ist derart zu optimieren und abzustimmen, dass bekannte Probleme im Bereich der CNNs (z.B. Überbestimmung) reduziert oder vermieden werden.

Gemäß der Erfindung werden CNN mit einer Unet-Struktur eingesetzt (z.B. Vanilla Unet, MultiResUnet), in welchen zunächst das Originalbild pixelgenau in mehreren Schritten gefaltet und reduziert wird. Anschließend werden die Information hochgefaltet und -skaliert und man erhält ein pixelgenau segmentiertes Bild in Originalauflösung.

Beim Training werden den CNN jeweils eine Mehrzahl von Bilddaten elektromikroskopischer Aufnahmen von aufbereiteten Stahlprobenoberflächen zur Verfügung gestellt, wobei Bildbereiche von Experten klassifiziert, also Gefüge-Phasen zugeordnet wurden. Bei ausreichender Menge an Trainingsdaten kann dann das CNN sich selbst so verändern, dass seine eigenen Zuordnungen von Gefüge-Bereichen zu Bilddaten auf Basis der Trainingsdaten fehlerminimiert sind. Das Minimieren der Fehler ist dabei der eigentliche Anpassungsprozess, der zu optimierten Filtern im CNN führt.

In den Trainingsdaten der CNN können dem gesamten Bildbereich oder wenigstens einem Teil der in jedem Bild gezeigten Phasen durch die Experten eine Klassifikation zugeordnet sein. Ein Experte bestimmt also beispielsweise Bildbereiche, in welchen eine Ferrit-Phase oder eine Martensit-Phase oder eine Perlit-Phase identifiziert werden kann. Diesen Klassifizierungsdaten machen die Bilddaten des Trainings zu "gelabelten Daten" zur Durchführung des überwachten Lernens. In der Praxis bestehen die "Label" oder "Klassifizierungsdaten" in einer Matrix, welche Pixeln oder Bildbereichen eine Klassifikationskennung zuordnet. Die Klassifizierungsdaten sind entsprechend ähnlich einer Zuordnungsmaske, die eine Klassifizierung über das Trainingsbild legt. Diese Daten werden zum Training des CNN verwendet. Es ist dabei möglich, jedoch keineswegs zwingend erforderlich, sämtliche Gefüge-Phasen in den Trainingsdaten getrennt zu klassifizieren. Art und Umfang der Klassifizierung davon geleitet sein, welche Gefüge-Phasen in einer späteren Anwendung des Systems besonders sicher erkannt werden sollen und relevant sind. Dies wird weiter unten erläutert.

Ein derart trainiertes CNN ist in der Lage, bei unbekannten Bilddaten eine Klassifizierung der Gefüge-Bereiche vorzunehmen, die in den Trainingsdaten bestimmten Klassen zugeordnet wurden. Die Besonderheit und Eignung eines CNN hinsichtlich seiner Berücksichtigung von Mustern und Strukturen, insbesondere auch bei unterschiedlichen Maßstäben und Vergrößerungen gewährleistet eine besonders verlässliche Erkennung von Gefüge-Bereichen durch das trainierte System.

Der erfindungsgemäße Einsatz von zwei CNN, wobei das zweite CNN dem ersten CNN nachgeordnet ist, erlaubt ein getrenntes Training der CNN und einen Einsatz von auf den Analyseschritt optimierten CNN hinsichtlich deren Architektur.

Vorzugsweise weisen die Trainingsdaten des ersten CNN außerdem Klassifizierungsdaten zu Bildbereichen von Gefüge-Phasen von "Martensit" auf.

Das erste CNN wird dann zumindest mit Trainingsdaten gespeist, in denen solche Bildbereiche von Experten klassifiziert sind, die als "Ferrit" oder "Martensit" identifiziert wurden. Auf diese Weise kann das CNN zumindest Gefüge-Phasen erkennen, die mit hoher Wahrscheinlichkeit "Ferrit" oder "Martensit" zuzuordnen sind. Da bei vielen Stählen diese Bestandteile die Hauptanteile der Phasen ausmachen, ist eine vorteilhafte Erfassung weiter Bereich von Proben möglich.

Das erste CNN wird aber ohne eine Differenzierung unterschiedlicher Ferrit-Phasen trainiert (bainitisch; nichtbainitisch), das zweite CNN wird ausschließlich auf diese Unterscheidung trainiert, sammelt also ausschließlich Trainingsdaten zur Unterscheidung zwischen verschiedenen Unterklassen des Ferrits und ggf. auch die Erkennung auf "Kein-Ferrit".

In einer Weiterbildung der Erfindung weisen die Trainingsdaten des ersten CNN außerdem Klassifizierungsdaten zu Bildbereichen von Gefüge-Phasen aus der Gruppe:
- "angelassener Martensit"
- "Restaustenit"
- "Karbide"
- "Perlit"
auf. Mit einem derart trainierten ersten CNN lassen sich die meisten Stahlproben einer ersten Klassifikation zuordnen, die dann durch das zweite CNN verfeinert wird.

Es hat sich gezeigt, dass die separate Gestaltung und das separate Training verbesserte Ergebnisse hinsichtlich der Ferrit-Klassifizierung erlauben. Dabei wird das zweite CNN (das Ferrit-CNN) nur auf solche Bereiche angesetzt, die vom ersten CNN als "Ferrit" klassifiziert wurden.

Es ist bevorzugt, wenn die Trainingsdaten der zweiten CNN außerdem Klassifizierungsdaten zu Bildbereichen von Gefüge-Phasen von "Nicht-Ferrit" aufweisen.

Das spezialisierte zweite CNN kann entsprechend die Klassifizierung des ersten CNN in dieser Hinsicht "revidieren", also mit seinem Spezialwissen die zunächst erfolgte Einordnung relativieren und einen analysierten Bereich als "Nicht-Ferrit" oder auch "unklassifiziert" kennzeichnen.

Es ist bevorzugt, wenn die Klassifikation der Aufnahme pixelgenau durchgeführt wird.

Die Aufnahme des Mikroskops wird, im Gegensatz zu einigen Ansätzen im Stand der Technik, pixelgenau klassifiziert, um eine präzisere Zuordnung und auch nachfolgende Quantifizierung der Anteile von Gefüge-Klassen vorzunehmen.

Vorzugsweise wird anschließend aus den Ergebnisdaten des klassifizierten Bildes des zweiten CNN der gesamte Flächenbereich jeder Klasse der identifizierten Gefüge-Bereiche bestimmt, um den gesamten Flächenanteil jedes Gefüge-Bereichs in der Aufnahme zu erhalten. Der quantifizierte Flächenanteil wenigstens eines der Gefüge-Bereiche wird anschließend ausgegeben.

Um die Ergebnisse unmittelbar nutzbar zu machen, wird anschließend das klassifizierte Bild bzw. die Klassifizierungsmatrix, die in ihren Dimensionen dem Bild regelmäßig entspricht und die entsprechenden Klassifizierungsdaten enthält, einer Auswertung unterworfen. Die Auswertung bestimmt die Bildanteile jeder der Klassen von Gefüge-Bereichen als flächenmäßigen Bildanteil. Dies kann insbesondere durch Bestimmung und Verhältnisbildung der jeweiligen klassifizierten Pixelflächen zur Gesamtfläche des Bildes geschehen.

Gemäß der Erfindung steht damit das Expertenwissen der Klassifizierung in Gestalt von zwei sequenziell angeordneten, separat trainierten und konfigurierten CNN zur raschen und reproduzierbaren Klassifizierung von Gefügen und den darin enthaltenen Phasen, Mischphasen oder Phasengruppen zur Verfügung. Die Quantifizierung von bestimmten Gefüge-Bereichen im Probenbereich ermöglicht es auch, Auswertungen ohne menschliche Experten kurzfristig und dokumentierbar und insbesondere mit quantifizierten Ergebnissen durchzuführen, beispielsweise um Produktionsprozesse kurzfristig anzupassen oder die Qualität eines Stahlproduktes quantitativ zu kennzeichnen. Außerdem ermöglicht eine Bereitstellung eines entsprechenden Verfahrens, beispielsweise in Gestalt eines Cloud-Services oder als portables Software-Produkt, Expertenwissen von verschiedenen Experten zu kombinieren oder durch unterschiedliche Experten trainierte Systeme zu vergleichen, wobei dann ein einheitlicher Standard auch bei verteilten Standorten bei der Klassifizierung von Stahlgefügen beibehalten werden kann, was die Verlässlichkeit der Analysen verbessert und eine Vergleichbarkeit mit Alternativ-Produkten ermöglicht.

Welche konkreten Klassifikationen zu Gefügen neben "Ferrit" in der Trainingsphase des ersten CNN verwendet werden, hängt von der späteren Bestimmung des Systems ab. In vielen Anwendungen wird beispielsweise ein System, welches im ersten CNN auf die Erkennung von Ferrit und dazu Austenit und "Martensit" trainiert wurde, bereits eine ausreichende Aussagekraft hervorbringen, wenn die Ferrit-Phasen durch das zweite CNN noch differenziert werden. Wird ein Training nur für eine Auswahl von Gefüge-Phasen eingesetzt, können auch Trainingsdaten verwendet werden, die eine Auffangklasse nutzen (z.B. Ferrit, Martensit einerseits und "Andere" andererseits, wobei Andere eine Gruppe unterschiedlicher Gefüge-Phasen umfasst).

In einer weiteren bevorzugten Ausgestaltung der Erfindung wird das Quantifizieren der Gefüge-Bereiche derart durchgeführt, dass nach der Klassifizierung, die unter die jeweils klassifizierten Flächen entfallenden Pixel des Originalbildes der Bildbereiche bestimmt werden. Eine derartige Auswertung ist besonders einfach durch einfache Pixelzählung möglich.

Es ist besonders bevorzugt, wenn neben der quantifizierten Anteile der erkannten Gefüge-Phasen außerdem ein bildliches Ergebnis ausgegeben wird. Dieses kann die unterschiedlichen Bildbereiche gemäß ihrer Klasse einfärben. Alternativ können in einem Bild über dem Eingabebild Markierungen oder Einfärbungen der jeweils erkannten Klassifizierungen der Gefüge-Phasen überlagert eingeblendet sein. Auf diese Weise kann ein Erkennungserfolg des CNN beispielsweise bedarfsweise durch Experten verifiziert werden und gegebenenfalls anhand von Fehlerkennungen ein optimiertes erneutes Training des CNN erfolgen.

Neben der Nutzung einer sequenziellen Folge von trainierten CNN, welches gemäß der vorstehenden Erläuterung trainiert wurde, ist ein weiterer Aspekt der Erfindung das eigentliche Training eines CNN mit Trainingsdaten, die aus klassifizierten elektronenmikroskopischen Aufnahmen mit zugeordneten Gefüge-Phasen bestehen. Wie oben bereits beschrieben, wird in den Bilddaten von einem Experten eine Begrenzung der Bildbereiche vorgenommen, die zu einer Gefüge-Phase zuzuordnen sind.

Für das Training der CNN werden Bilder von ferritischen, martensitische, sowie Dual- und Mehrphasenstähle unterschiedlicher Festigkeitsklassen auf zwei unterschiedliche Arten annotiert:
Für das erste CNN (Allgemeines Phasennetz) werden alle sichtbaren Gefügebestandteile in eine der folgenden Klassen einsortiert und von Expertenseite gelabelt (annotiert):
- Ferrit
sowie einige oder alle der folgenden Klassen:
- Martensit
- angelassener Martensit
- Restaustenit
- Karbide
- Perlit

Dieselben Bilder können auch für das zweite, nachgeordnete CNN ("Bainitnetz") ein weiteres Mal gelabelt werden, wobei der "Ferrit" in zwei Klassen unterteilt wird, nämlich in "bainitischer Ferrit" und "nicht-bainitscher Ferrit".

Alle anderen Gefügebestandteile wie "Martensit", "angelassener Martensit", "Restaustenit", "Karbide" und "Perlit" sind für das zweite CNN in der Klasse "nicht-Ferrit" zusammengefasst. Für das Training von erstem CNN und zweitem CNN können grundsätzlich auch unterschiedliche Trainingsdaten verwendet werden.

Wie bereits oben erwähnt, können erstes CNN und zweites CNN sich in Struktur und Aufbau unterscheiden, wobei auch empirisch aus mehreren Architekturen jedes der CNN auf die jeweils beste Erkennungsrate optimiert werden kann.

Ein derartig trainiertes System aus erstem CNN und nachgeordnetem zweiten CNN kann dann in dem erfindungsgemäßen Verfahren eingesetzt werden. So kann beispielsweise ein Elektronenmikroskop mit einer nachgeordneten Auswertung gekoppelt werden, die ein erfindungsgemäß trainiertes CNN aufweist.

Die Erfindung wird nun anhand der beiliegenden Zeichnungen näher erläutert.
Figur 1 zeigt anhand eines ersten Ausführungsbeispiels der Erfindung die Klassifizierung von Gefüge-Phasen in einer elektronenmikroskopischen Aufnahme mit einem Convolutional Neural Network gemäß dem Stand der Technik;
Figur 2 zeigt die Resultate der Zuordnung durch das Convolutional Neural Network aus Figur 1;
Figur 3 zeigt eine Ausführungsform der Erfindung unter Verwendung von zwei sequenziell angeordneten Convolutional Neural Networks;
Figur 4 zeigt die Verfahrensschritte der quantitativen weiteren Auswertung der Klassifizierungsdaten aus Figur **3****.**

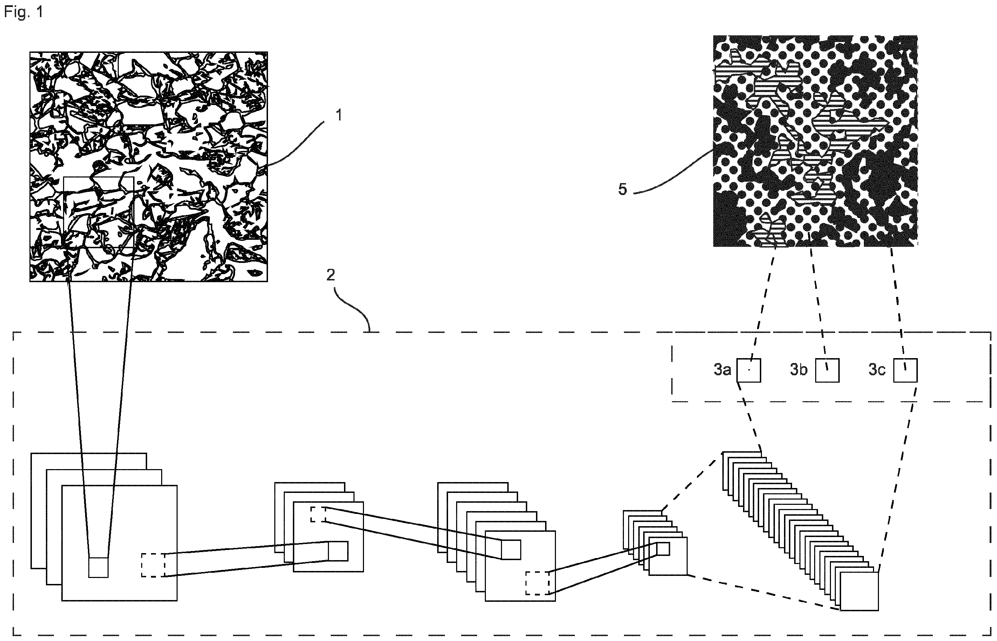

In Figur 1 ist schematisch ein erster Abschnitt eines Verfahrens zur Analyse von Gefügen mit Hilfe von neuronalen Netzen gemäß dem Stand der Technik gezeigt. Eine elektronenmikroskopische Aufnahme 1 wird in einer in der Metallurgie grundsätzlich bekannten Art und Weise erstellt. Die Probenaufbereitung erfolgt nach einem optionalen Trennschritt durch abrasive Bearbeitung einer Probe, insbesondere umfassend Schleif- und Polierschritte und anschließend eine Ätzung. In diesem Beispiel erfolgt eine Mikroätzung mit Nital. Im Rahmen der Vorbereitung der Trainingsproben für die Erfindung wird die Ätzung mit Nital (3 % alkoholische Salpetersäure) gewählt, da sie im Elektronenmikroskop insbesondere "Martensit" und Restaustenit unterscheidbar macht. In einer Rasterelektronenmikroskop-Einrichtung wird die Probe anschließend abgerastert, wobei beispielsweise ein Arbeitsabstand von 3 mm mit einer Beschleunigungsspannung von 1 keV bei Vergrößerung zwischen 3.000 und 10.000 eingestellt wird.

Die resultierende elektronenmikroskopische Aufnahme ist in Figur 1 mit dem Bezugszeichen 1 gekennzeichnet. Diese Gestaltung und Nutzung gemäß der Figur 1 entspricht im erfindungsgemäßen Verfahren dem Einsatz des ersten CNN. Es werden vorzugsweise hochaufgelöste REM-Bilder verwendet, die dem trainierten ersten CNN zur pixelgenauen Verarbeitung zugeführt werden. Dieses erste Convolutional Neural Network weist eine Eingabeebene, Faltungsebenen, Poolingebenen und eine Klassifizierungsebene (fully-connected layer) auf. Die konkrete Dimensionierung und Parametrisierung des ersten CNN, insbesondere die Anzahl der verwendeten Filter (Kernel), die Schrittweite (stride) und die Anzahl der Schichten (Layer) wird empirisch in Abhängigkeit von der Anzahl der unterschiedlichen Gefüge-Phasen-Klassen und der Ergebnisse des Trainings gefunden.

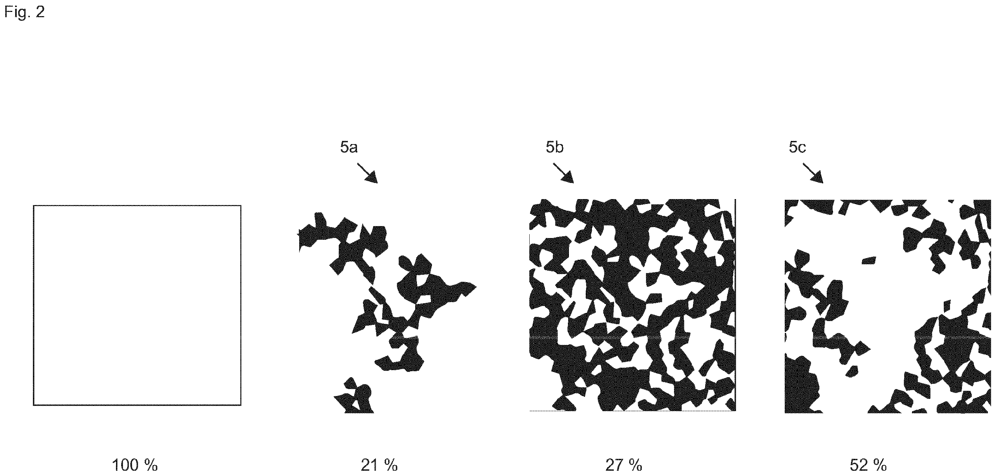

In der dargestellten Ausführungsform der Figuren 1 und 2 ist das erste CNN zur Klassifizierung in drei Klassen von Gefüge-Phasen trainiert. Diese drei Gefüge-Phasen sind durch das Training bestimmt und angelernt. So enthalten die Trainingsdaten beispielsweise gelabelte (klassifizierte) Bilddaten, ausgewählt aus den Gefüge-Phasen "Ferrit", "Martensit" sowie auswahlweise "angelassener Martensit", "Restaustenit", "Karbide" oder "Perlit". Es ist grundsätzlich auch möglich, in den Trainingsdaten Hilfsklassen einzubeziehen, die keinen konkreten Gefüge-Phasen entsprechen.

Zur einfachen Darstellung wird in diesem Beispiel davon ausgegangen, dass die drei Klassen von Gefüge-Phasen ausgewählt sind als "Ferrit" in Klasse 3a, "Martensit" in Klasse 3b und "Andere" in Klasse 3c.

Die Darstellung des ersten CNN erfolgt hier schematisch, wobei die Faltungsschritte, Reduktionsschritte und Zuordnungsschritte symbolisch dargestellt sind. Zur Realisierung des CNN wird in diesem Ausführungsbeispiel auf Software-Tools für CNN mit einer Unet-Struktur (z.B. Vanilla Unet, MultiResUnet) zurückgegriffen, welche die entsprechende Konfiguration und Parametrisierung eines geeigneten CNN 2 erlauben.

Als Ausgabe liefert das erste CNN 2 Zuordnungen zu allen Bildbereichen des Bildes 1 zu Klassen, für die das CNN trainiert wurde, insbesondere "Ferrit" und andere Gefüge Phasen. Verschiedene Gefüge-Bereichen in dem Bild werden also mit jeweils zugeordneten Klassifizierungsdaten verknüpft und sind unter den Bezugszeichen 5 zweidimensional mit graphischer Kennzeichnung und unterschiedlichen Flächenfüllungen dargestellt. Jeder Bildbereich, also jedes Pixel des Bildes 1 ist einer entsprechenden Klasse 3a ("Ferrit"), 3b ("Martensit") bzw. 3c ("Andere") zugeordnet.

In Figur 2 sind die vom CNN klassifizierten Gefüge-Bereiche getrennt dargestellt. Die gesamte Bildausdehnung ist links mit einer Gesamtfläche von 100 % gezeigt. Daneben sind die klassifizierten Gefüge-Bereiche 5a (Klasse 3a), 5b (Klasse 3b) und 5c (Klasse 3c) dargestellt, entsprechend den Flächen der Klassen 3a, 3b bzw. 3c. Die Anteile der jeweiligen Gefüge-Bereiche werden durch die Bildanteile 5a, 5b und 5c bestimmt, wobei die Pixelzahl jedes klassifizierten Bildbereiches durch Bestimmung der überdeckten Fläche, beispielsweise der überdeckten Pixel festgelegt wird. Die entsprechenden Bildanteile sind in Figur 2 unterhalb der jeweiligen Darstellung angezeigt und geben eine quantitative Bestimmung des Flächenanteils jeder der Gefüge-Phasen an.

Eine derartige Klassifikation und Quantifizierung erlaubt es auch solchen Nutzern, die keine Fachleute der Metallurgie sind, eine quantitative Charakterisierung der jeweiligen Stahlgefüge vorzunehmen.

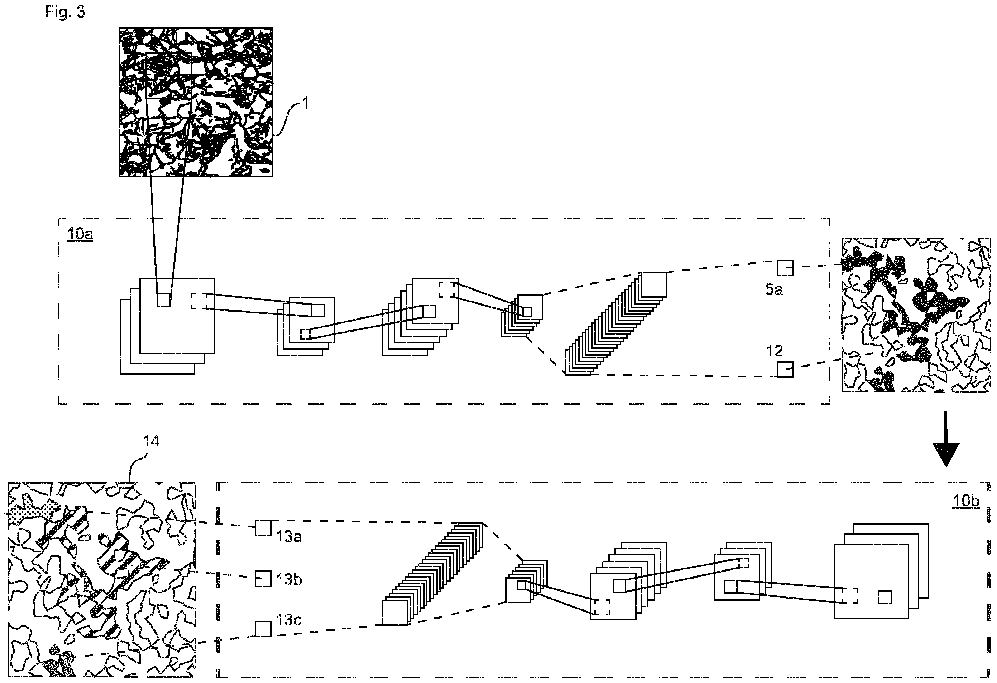

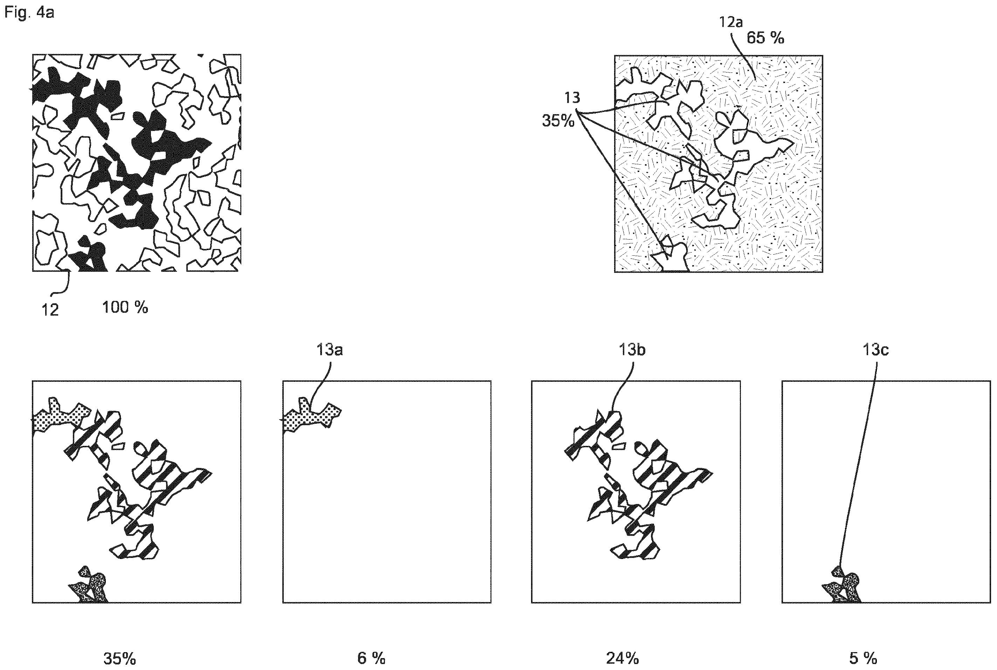

Die Figuren 3 und 4 zeigen die erfindungsgemäße weitere Verarbeitung in einem Ausführungsbeispiel. Das Ergebnis der Erkennung aus dem ersten CNN 10a, das oben unter Bezug auf die Figuren 1 und 2 gemäß dem Stand der Technik gestaltet ist, wird zusammen mit den Ursprungs-Bilddaten in ein zweites CNN 10b eingegeben. Erstes CNN 10a und zweites CNN 10b unterscheiden sich in ihren Trainingsdaten und ggf. in ihrer Struktur und damit ihrem Lerninhalt und Klassifizierungsvermögen. Das CNN 10a ist mit Trainingsdaten angelernt, die nicht zwischen verschiedenen Gefüge-Arten von "Ferrit" unterscheiden, sondern diese in Gesamtheit als "Ferrit" erkennen. In Figur 2 waren die als "Ferrit" erkannten Bildbereiche unter Bezugszeichen 5a dargestellt, ebenso wie in Fig. **3****.** Die übrigen Bereiche 12, die als "Martensit" oder "Andere" erkannt wurden, sind ungefüllt dargestellt (ggf. weitere Gefügearten sind hier nicht dargestellt, um die Darstellung nicht unübersichtlich zu machen).

Das zweite CNN 10b ist trainiert, um Bild Bereiche, die der Klasse "Ferrit" zugeordnet wurden in "nicht-bainitisches Ferrit" 13a, "bainitisches Ferrit" 13b und "Nicht-Ferrit" 13c zu klassifizieren. Das zweite CNN wird dabei nur auf solche Bereiche des Originalbildes angewandt, welche vom ersten CNN als "Ferrit" erkannt wurden. Das zweite CNN 10b führt also eine Differenzierung der als "Ferrit" klassifizierten Bereiche aus dem ersten CNN 10a aus.

Die Zuordnungen sowohl des ersten CNN 10a als auch des zweiten CNN 10b können anschließend einer quantitativen Auswertung zugeführt werden, wobei für die Bereiche, für die eine Klassifizierung durch das zweite CNN 10b vorgenommen wurde (die also im ersten CNN 10a als "Ferrit" erkannt wurden) die Klassifizierungen des zweiten CNN 10b verwendet werden.

Die quantifizierte Auswertung in Figur 4 zeigt dann, dass die Ergebnisse des ersten CNN 10a (obere Reihe) eine Differenzierung zwischen "Martensit" und anderen erlauben, während das zweite CNN eine quantitative Differenzierung zwischen "bainitischem Ferrit", "nicht bainitischem Ferrit" und "nicht-Ferrit erlaubt".

Wie erkennbar, werden von den 100% des Bildes durch das erste CNN die Bereiche 12a pixelgenau klassifiziert, während die Bereiche 13 (vom ersten CNN als "Ferrit" erkannt) durch das zweite CNN klassifiziert werden. In diesem Beispiel werden also 65%, die vom ersten CNN nicht als "Ferrit" erkannt wurden, durch das erste CNN klassifiziert. Die verbleibenden 35%, die vom ersten CNN als "Ferrit" erkannt wurden, werden (siehe untere Reihe) durch das zweite CNN in verschiedene Gefüge-Klassen von "Ferrit" oder auch "Nicht-Ferrit" eingeordnet. In diesem Beispiel werden 6% als "Bainitischer Ferrit", 24% als "Nicht-Bainitischer Ferrit" und 5% als "Nicht-Ferrit" erkannt. Die Prozentzahlen beziehen sich dabei auf die ursprüngliche Gesamtbildgröße.

Anschließend kann anhand der Zusammenschau bestimmt werden, welche Gefügeanteile in der Gesamtprobe auftreten. (Die in diesem Beispiel gezeigten quantitativen Anteile sind bei tatsächlichen Stahlproben regelmäßig nicht realistisch, hier wurde jedoch zur Verdeutlichung des Prinzips eine übertriebene Darstellung gewählt.)

## Patentansprüche

1. Verfahren zur Analyse von Gefügen in Stahlproben, aufweisend die Schritte,
Aufbereiten einer Oberfläche der Stahlprobe durch Trennung und mechanisch abrasive Bearbeitung sowie anschließendes Ätzen,
Erstellen wenigstens einer elektronenmikroskopischen Aufnahme (1) der aufbereiteten Oberfläche,
Eingeben der Aufnahme (1) in ein erstes trainiertes Convolutional Neural Network (CNN) (10a), wobei die Trainingsdaten des ersten CNN elektronenmikroskopische Aufnahmen mit zugeordneten Klassifizierungsdaten zu Bildbereichen von mehreren Gefüge-Phase als Trainingsklassen aufweisen,
wobei die Trainingsdaten des ersten CNN Klassifizierungsdaten zu Bildbereichen von Gefüge-Phasen von "Ferrit" aufweisen,
Klassifizieren der Aufnahme (1) durch das erste CNN, wobei eine Mehrzahl Bereichen (12) der Aufnahme zu Gefüge-Bereichen zugeordnet werden, welche jeweils einer der Trainingsklassen zugeordnet sind,
**gekennzeichnet durch**,
nachfolgendes Eingeben der Aufnahme (1) in ein zweites trainiertes CNN (10b) wobei die Trainingsdaten des zweiten CNN elektronenmikroskopische Aufnahmen mit zugeordneten Klassifizierungsdaten zu Bildbereichen wenigstens von den Gefüge-Phasen "Bainitischer Ferrit" (13a) und "Nicht-Bainitischer Ferrit" (13b) als Trainingsklassen aufweisen,
wobei die Klassifizierung durch das zweite CNN (10b) in Abhängigkeit von der Klassifizierung durch das erste CNN auf Bildbereiche (13) beschränkt wird, welche durch die Klassifizierung des ersten CNN (10a) als "Ferrit" klassifiziert wurden,
Ausgeben der kombinierten Klassifizierungen für sowohl des ersten (10a) als auch des zweiten CNN (10b), wobei für die vom zweiten CNN klassifizierten Bereiche dessen Klassifikation statt der Klassifikation des ersten CNN ausgegeben werden.

2. Verfahren nach Anspruch 1, wobei die Trainingsdaten des ersten CNN (10a) außerdem Klassifizierungsdaten zu Bildbereichen von Gefüge-Phasen von "Martensit" aufweisen.

3. Verfahren nach Anspruch 2, wobei die Trainingsdaten des ersten CNN (10a) außerdem Klassifizierungsdaten zu Bildbereichen von Gefüge-Phasen aus der Gruppe:
- "angelassener Martensit"
- "Restaustenit"
- "Karbide"
- "Perlit"
aufweisen.

4. Verfahren nach einem der vorangehenden Ansprüche, wobei die Trainingsdaten der zweiten CNN (10b) außerdem Klassifizierungsdaten zu Bildbereichen von Gefüge-Phasen von "Nicht-Ferrit" aufweisen.

5. Verfahren nach einem der vorangehenden Ansprüche, wobei die Klassifikation der Aufnahme (1) pixelgenau durchgeführt wird.

6. Verfahren nach einem der vorangehenden Ansprüche, weiterhin mit den Schritten:
Quantifizieren von Flächenbereichen jedes klassifizierten Gefüge-Bereiches in der Aufnahme anhand der Klassifikation sowohl des ersten CNN (10a) als auch des zweiten CNN (10b), und
Ausgeben des quantifizierten Flächenanteils wenigstens einer der Gefüge-Phasen.

7. Verfahren nach Anspruch 6, wobei das Quantifizieren der Flächenbereiche erfolgt, indem eine auf die klassifizierten Flächen jeweils entfallende Pixelanzahl der Bildbereiche bestimmt wird.

8. Verfahren nach einem der vorangehenden Ansprüche, wobei zusätzlich eine Bildausgabe generiert wird, in welcher die jeweils zugeordneten Gefüge-Bereiche grafisch gemäß der Klassifikation markiert sind.

9. Verfahren nach einem der vorangehenden Ansprüche, wobei das erste CNN und das zweite CNN sich in ihrer Konfiguration, insbesondere in der Zahl Ihrer Ebenen unterscheiden.

## Claims

1. Method for analyzing microstructures in steel samples, comprising the steps of preparing a surface of the steel sample by sectioning and mechanical abrasive treatment and subsequent etching, creating at least one electron-microscopic image (1) of the prepared surface, inputting the image (1) into a first trained convolutional neural network (CNN) (10a), wherein the training data of the first CNN comprise electron-microscopic images with associated classification data relating to image regions of multiple microstructure phases as training classes, wherein the training data of the first CNN comprise classification data relating to image regions of microstructure phases of "ferrite", classifying the image (1) by the first CNN, wherein a plurality of regions (12) of the image are assigned to microstructure regions, each of said microstructure regions being assigned to one of the training classes, **characterized by** subsequently inputting the image (1) into a second trained CNN (10b), wherein the training data of the second CNN comprise electron-microscopic images with associated classification data relating to image regions of at least the microstructure phases "bainitic ferrite" (13a) and "non-bainitic ferrite" (13b) as training classes, wherein the classification by the second CNN (10b) is restricted, depending on the classification by the first CNN, to image regions (13) which have been classified as "ferrite" by the classification of the first CNN (10a), outputting the combined classifications of both the first (10a) and the second CNN (10b), wherein, for the regions classified by the second CNN, its classification is output instead of the classification of the first CNN.

2. Method according to claim 1, wherein the training data of the first CNN (10a) further comprise classification data relating to image regions of microstructure phases of "martensite".

3. Method according to claim 2, wherein the training data of the first CNN (10a) further comprise classification data relating to image regions of microstructure phases from the group: "tempered martensite", "retained austenite", "carbides", "pearlite".

4. Method according to any one of the preceding claims, wherein the training data of the second CNN (10b) further comprise classification data relating to image regions of microstructure phases of "non-ferrite".

5. Method according to any one of the preceding claims, wherein the classification of the image (1) is carried out with pixel-level accuracy.

6. Method according to any one of the preceding claims, further comprising the steps of quantifying areas of each classified microstructure region in the image on the basis of the classification of both the first CNN (10a) and the second CNN (10b), and outputting the quantified area fraction of at least one of the microstructure phases.

7. Method according to claim 6, wherein the quantifying of the areas is carried out by determining a number of pixels of the image regions respectively attributable to the classified areas.

8. Method according to any one of the preceding claims, wherein additionally an image output is generated, in which the respectively assigned microstructure regions are graphically marked in accordance with the classification.

9. Method according to any one of the preceding claims, wherein the first CNN and the second CNN differ in their configuration, in particular in the number of their layers.

## Revendications

1. Procédé d'analyse de microstructures dans des échantillons d'acier, comprenant les étapes consistant à préparer une surface de l'échantillon d'acier par sectionnement et traitement mécanique abrasif ainsi qu'une attaque subséquente, réaliser au moins une image de microscopie électronique (1) de la surface préparée, introduire l'image (1) dans un premier réseau neuronal convolutif (CNN) entraîné (10a), les données d'apprentissage du premier CNN comprenant des images de microscopie électronique avec des données de classification associées relatives à des zones d'image de plusieurs phases de microstructure en tant que classes d'apprentissage, les données d'apprentissage du premier CNN comprenant des données de classification relatives à des zones d'image de phases de microstructure de « ferrite », classifier l'image (1) par le premier CNN, une pluralité de zones (12) de l'image étant attribuées à des zones de microstructure, chacune desdites zones de microstructure étant attribuée à l'une des classes d'apprentissage, **caractérisé en ce qu'**il comprend en outre les étapes consistant à introduire ensuite l'image (1) dans un second CNN entraîné (10b), les données d'apprentissage du second CNN comprenant des images de microscopie électronique avec des données de classification associées relatives à des zones d'image d'au moins les phases de microstructure « ferrite bainitique » (13a) et « ferrite non bainitique » (13b) en tant que classes d'apprentissage, limiter la classification par le second CNN (10b), en fonction de la classification par le premier CNN, à des zones d'image (13) qui ont été classifiées comme « ferrite » par le premier CNN (10a), et délivrer les classifications combinées du premier (10a) et du second CNN (10b), la classification du second CNN étant délivrée, pour les zones classifiées par celui-ci, à la place de la classification du premier CNN.

2. Procédé selon la revendication 1, dans lequel les données d'apprentissage du premier CNN (10a) comprennent en outre des données de classification relatives à des zones d'image de phases de microstructure de « martensite ».

3. Procédé selon la revendication 2, dans lequel les données d'apprentissage du premier CNN (10a) comprennent en outre des données de classification relatives à des zones d'image de phases de microstructure issues du groupe : « martensite revenue », « austénite résiduelle », « carbures », « perlite ».

4. Procédé selon l'une quelconque des revendications précédentes, dans lequel les données d'apprentissage du second CNN (10b) comprennent en outre des données de classification relatives à des zones d'image de phases de microstructure de « non-ferrite ».

5. Procédé selon l'une quelconque des revendications précédentes, dans lequel la classification de l'image (1) est effectuée avec une précision au niveau du pixel.

6. Procédé selon l'une quelconque des revendications précédentes, comprenant en outre les étapes consistant à quantifier les surfaces de chaque zone de microstructure classifiée dans l'image sur la base de la classification du premier CNN (10a) et du second CNN (10b), et délivrer la fraction surfacique quantifiée d'au moins l'une des phases de microstructure.

7. Procédé selon la revendication 6, dans lequel la quantification des surfaces est effectuée en déterminant un nombre de pixels des zones d'image respectivement attribuables aux surfaces classifiées.

8. Procédé selon l'une quelconque des revendications précédentes, dans lequel une sortie d'image est en outre générée, dans laquelle les zones de microstructure respectivement attribuées sont marquées graphiquement conformément à la classification.

9. Procédé selon l'une quelconque des revendications précédentes, dans lequel le premier CNN et le second CNN diffèrent dans leur configuration, en particulier dans le nombre de leurs couches.
